# EUROPEAN PATENT SPECIFICATION

(11) **EP 2 537 783 B1**
(45) Date of publication and mention of the grant of the patent: **12.06.2013**
(21) Application number: 12172090.8
(22) Date of filing: 14.06.2012
(51) Int. Cl.: B65G 47/52, B65G 57/24

(54) **Device for lifting and unloading a layer of packs**
Vorrichtung zum Abheben und Entladen einer Lage von Packungen
Dispositif pour soulever et décharger une couche de paquets

(30) Priority: 20.06.2011 IT PR20110056
(43) Date of publication of application: 26.12.2012
(73) Proprietor: Gea Procomac S.p.A., 43038 Sala Baganza (PR) (IT)
(72) Inventor: Vitale, Stefano, 42121 REGGIO EMILIA (IT)
(74) Representative: Monelli, Alberto

(56) References cited:
- FR-A1- 2 436 727
- GB-A- 191 028 169
- US-A- 1 832 000
- US-A- 4 987 992

## Description

The present invention relates to a device for lifting and unloading a layer of packs. In particular, the device proposed has application in palletizing apparatus.

Material transfer apparatus of the type described in patent documents US4987992 and DE4412830 are well known.

As is well known, in order to simplify transport operations, products packaged individually are subsequently grouped together and made into packs having shapes such as to be easily manoeuvrable and optimize the occupation of space. A classic example of "primary" and "secondary" packaging is to be found in the distribution of beverages, which are first packaged in bottles (or tins) and subsequently made into packs comprising a predetermined number of bottles (or tins). In the currently known palletization systems, the packs are subjected to various operations, such as selection, division, positioning and/or orientation according to pre-established layouts and grouping in layers. The layers thus obtained are finally stacked on pallets. Lifting of the layers in order to allow the stacking thereof on pallets takes place, for example, by means of the so-called "single mobile plane" system. This solution envisages a vertically mobile plane which receives the layer at an initial height and, at the end of the vertical ascent, makes it available at a final (greater) height so that it can be placed on a pallet. During the vertical movement of one layer, the other layers arriving from upstream have to wait until the mobile plane returns to the initial height and thus remain stationary on an accumulation table. This wait time negatively impacts the overall productivity of the line.

An alternative solution is represented by the so-called "double mobile plane", based on the presence of two mobile planes alternating between an initial height and a final height. While one plane is busy lifting a layer, a second plane is being lowered back to the initial height to receive a new layer.

This solution is more costly and cumbersome than the previous one since it makes use of an additional plane. In any case, the advantages in terms of productivity are not such as to justify the increase in cost and complexity.

US 4 987 992 A1 discloses an apparatus for lifting products from a first plane to a second plane. This apparatus contains all the features of the preamble of claim 1.

DE 44 12 830 A1 discloses a palletizing device wherein the layers are first formed and stacked.

Those devices are quite cumbersome.

In this context, the technical task at the basis of the present invention is to propose a device for lifting and unloading a layer of packs which overcome the above-mentioned drawbacks of the prior art.

In particular, it is an object of the present invention to provide a device for lifting and unloading a layer of packs which is endowed with greater productivity compared to the prior art solutions and, as such, enable the overall productivity of the line to be improved.

Furthermore, it is an object of the present invention to provide a device for lifting and unloading a layer of packs that is constructively simple, compact and economical.

The stated technical task and specified objects are substantially achieved by a device for lifting and unloading a layer of packs comprising the technical features disclosed in one or more of the appended claims.

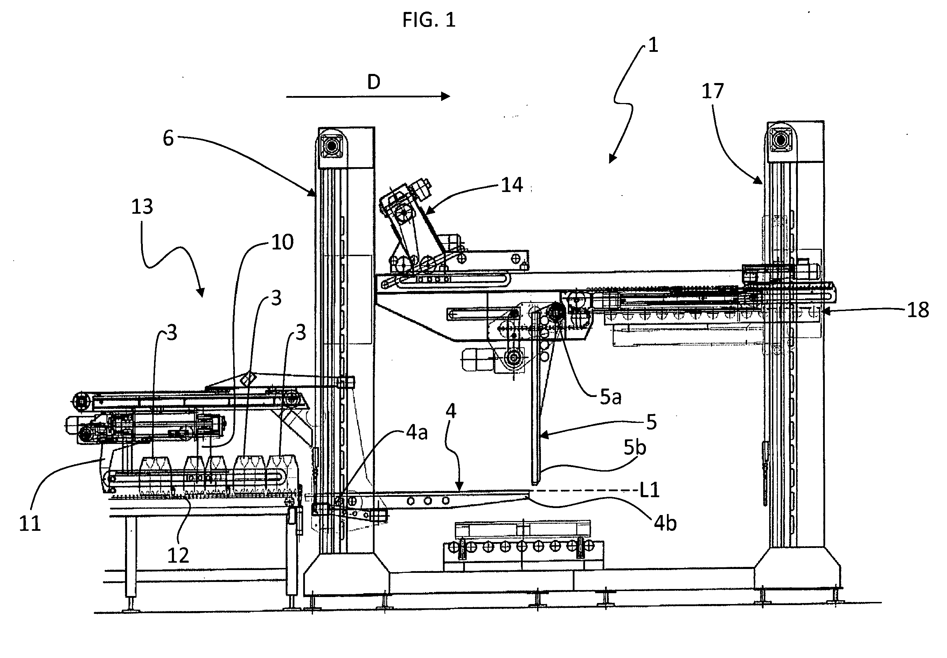

Additional features and advantages of the present invention will be more apparent from the approximate, and hence non-restrictive description of a preferred but not exclusive embodiment of a device for lifting and unloading a layer of packs as illustrated in the appended drawings in which:
^{∼}- figures 1 to 7 illustrate side views of a device for lifting and unloading a layer of packs, according to the present invention, in an equal number of operating steps;

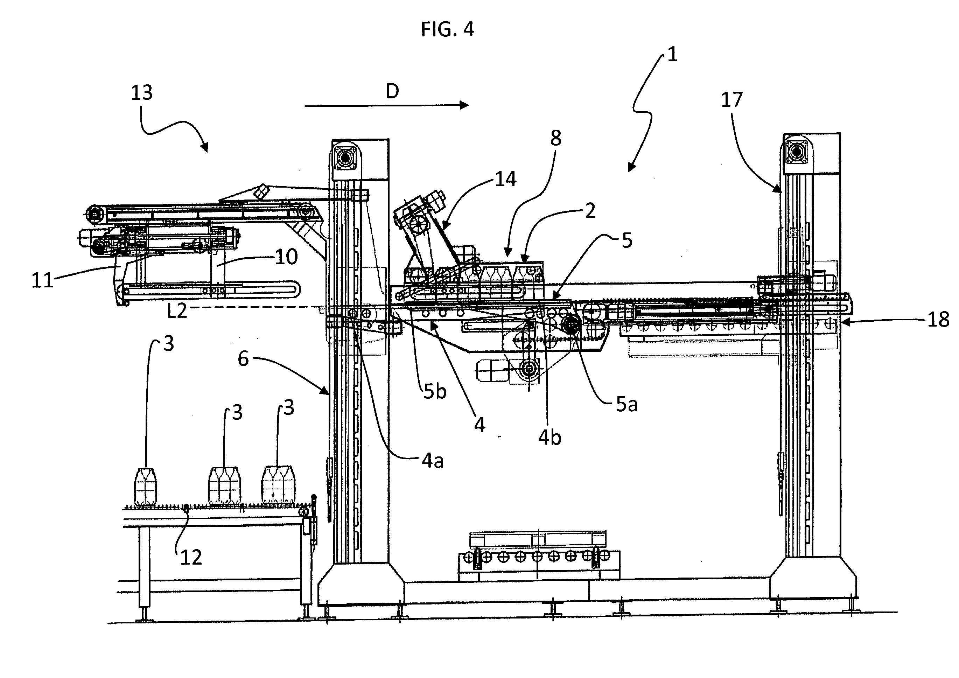

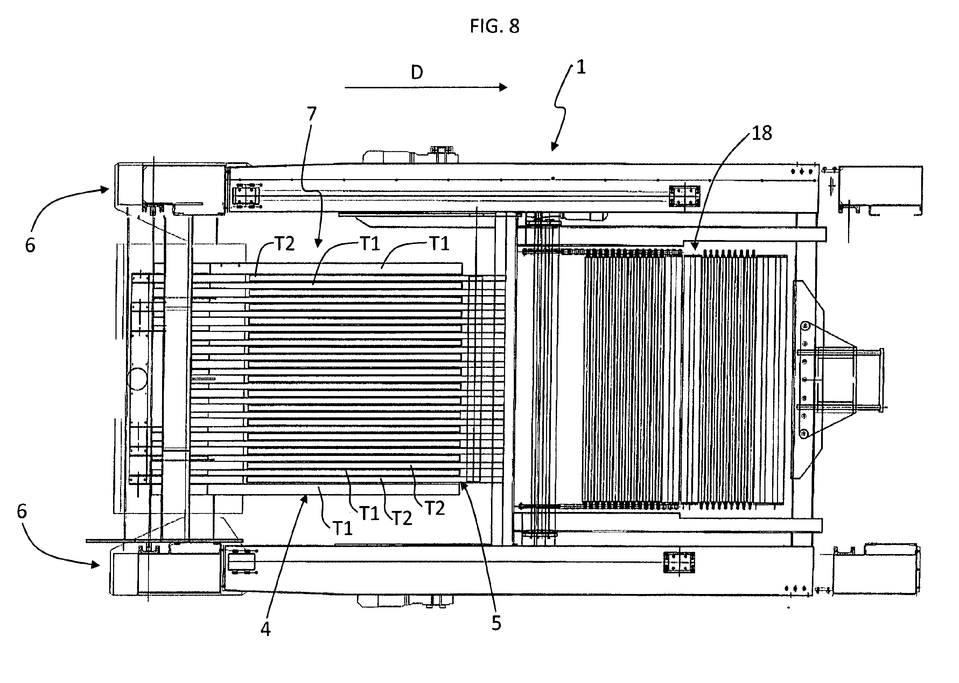

- figure 8 illustrates a view from above of the device in the operating step of figure 4 (the layer has been removed for the sake of clarity).

With reference to the figures, 1 indicates a device for lifting and unloading a layer 2 of packs 3. The lifting device 1 comprises a loading plane 4 and an unloading plane 5. The loading plane 4 is mobile between an initial height L1 at which it receives the layer 2 to be lifted and a final height L2 to which the received layer 2 is brought.

The loading plane 4 extends substantially horizontally and is slidingly mounted on two vertical upright guides 6 which are parallel to each other. In other words, the loading plane 4 is capable of translating vertically from the initial height L1 to the final height L2 and vice versa.

The unloading plane 5 is configured to cooperate with the loading plane 4 at an unloading station 8 located at the final height L2, so that the layer 2 is transferred from the loading plane 4 to the unloading plane 5 (see figure 4). In particular, the unloading plane 5 is situated downstream of the loading plane 4.

The loading plane 4 and the unloading plane 5 are mutually complementarily shaped so as to reciprocally interfere and interpenetrate at the unloading station 8, thereby defining an exchange plane 7 for the layer 2 (see figure 8).

In the embodiment described and illustrated here, the loading plane 4 and the unloading plane 5 are comb-toothed planes, i.e. provided with teeth T1, T2. Advantageously, the exchange plane 7 is defined by an alternation of teeth T1 of the loading plane 4 and teeth T2 of the unloading plane 5.

Preferably, the teeth T1 of the loading plane 4 and the teeth T2 of the unloading plane 5 extend longitudinally, substantially parallel to an advancing direction D of the layer 2 along the exchange plane 7.

According to the invention, the unloading plane 5 is hinged at a fixed end 5a thereof so as to rotate between a first angular position in which it avoids interfering with the loading plane 4 and a second angular position in which it defines the exchange plane 7 with the loading plane 4.

The unloading plane 5 moreover exhibits a free end 5b, opposite the fixed end 5a, which free end can assume different heights during the rotation of the unloading plane 5 around the fixed end 5a thereof.

In particular, when the unloading plane 5 assumes the first angular position, the free end 5b is at a lower height relative to the height at which the fixed end 5a is hinged (see figure 1). In the second angular position, in contrast, the free end 5b is at the same height as the fixed end 5a (see figure 4).

Preferably, in order to pass from the first to the second angular position, the unloading plane 5 covers an angle of about 90°. In particular, in the first angular position the unloading plane 5 is disposed substantially vertically, i.e. it is orthogonal to the loading plane 4. As can be seen from figure 1, the loading plane 4 has a fixed end 4a sliding on guide uprights 6 and a free end 4b which is opposite the fixed end 4a. When the unloading plane 5 is in the first angular position and the loading plane 4 is at the initial height L1, the free end 5b of the unloading plane 5 is situated in proximity to the free end 4b of the loading plane 4.

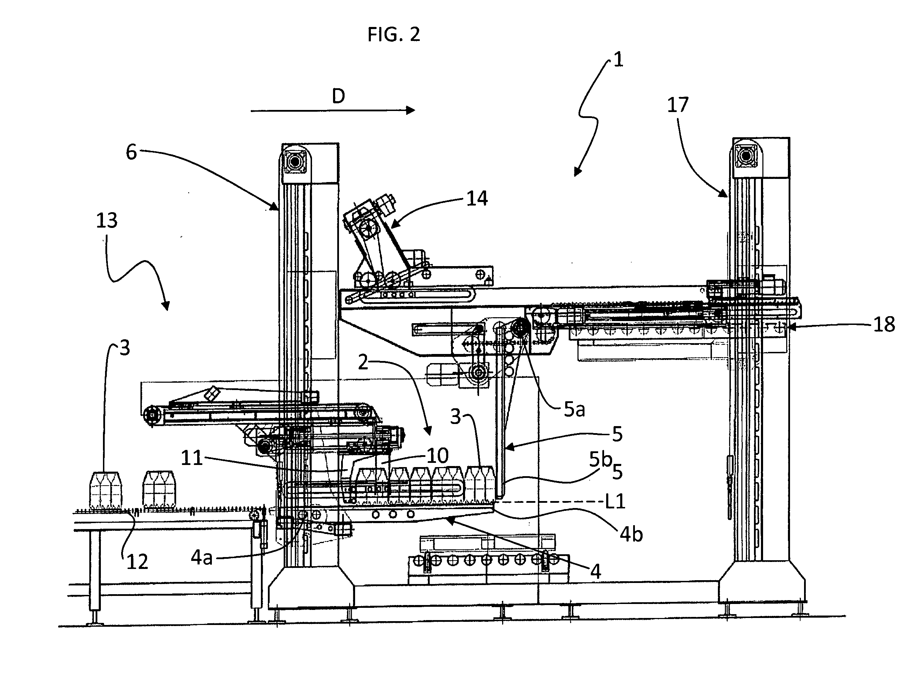

Advantageously, the free end 5b of the unloading plane 5 is operatively active alongside the free end 4b of the loading plane 4 so as to limit the advancing of the layer 2 and prevent it from falling (see figure 2). In other words, the loading plane 4 and the unloading plane 5 form an "L" with disjointed branches.

In the second angular position, in contrast, the unloading plane 5 is disposed substantially horizontally at the final height L2. This configuration can arise only after the loading plane 4 has already reached the final height L2 (as will be explained further below).

In an alternative embodiment (not illustrated), the unloading plane 5 is always at the final height L2 and is linearly mobile between a first position in which it avoids interfering with the loading plane 4, and a second position in which it defines the exchange plane 7 together with the loading plane 4.

A method for stacking layers of packs on a pallet, not part of the present invention, is described below, with particular reference to figures 1-7.

The formation of the layer 2 can take place according to known methods, for example by sorting the packs 3 into queues, turning them and laterally compacting them. Figure 1 illustrates lateral bars 10 operatively active on the packs 3 to compact them while they are on a forming plane 12 at the initial height L1. The forming plane 12 is upstream of the loading plane 4. For example, the forming plane 12 is made up of rollers or else is formed by modular conveyor belts. A pusher member 11 then transfers the layer 2 formed by the forming plane 12 to the loading plane 4, initially set at the initial height L1 (see figure 2).

The lateral bars 10, the pusher member 11 and the loading plane 4 make up manipulation and handling means 13 slidingly mounted on vertical guide uprights 6. The lateral bars 10 and the pusher member 11 are moreover linearly mobile above the initial height L1 so as to pass from a zone above the forming plane 12 (figure 1) to a zone above the loading plane 4 (figure 2).

Initially, the unloading plane 5 is in the first angular position so that the free end 5b thereof blocks the advancing of the layer 2 on the loading plane 4 due to the action of the pusher member 11. Practically speaking, the free end 5b of the unloading plane 5 acts as an opposing block for the layer 2 (figure 2). Subsequently, the manipulation and handling means 13 slide vertically upwards along the guide uprights 6 until the loading plane 4 arrives at the final height L2 (see figures 3 and 4).

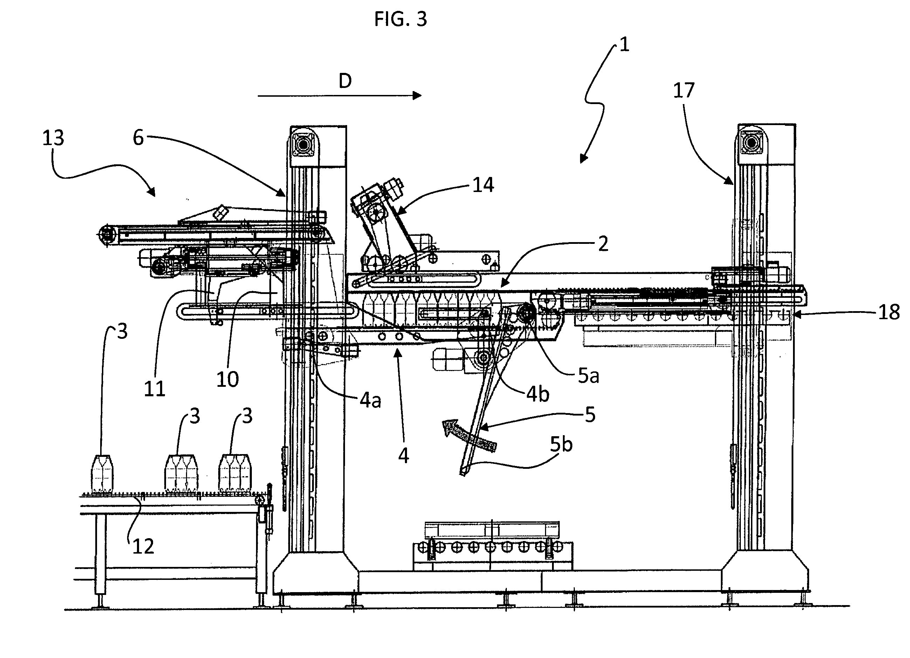

Simultaneously, the lateral bars 10 and the pusher member 11 are made to retreat linearly so as to return into the zone above the forming plane 12. In particular, the lateral bars 10 and the pusher member 11 return upstream of the vertical guide uprights 6 (see figures 3 and 4).

The unloading plane 5 begins rotating only after the start of the upward linear travel of the loading plane 4 (figure 3). This sequence of movements is indispensable in order to prevent the unloading plane 5 from impacting against the layer 2 situated on the loading plane 4 during the rotation. At the end of the rotation, the unloading plane 5 will be in the second angular position, i.e. substantially horizontal.

As a result, the teeth T1 of the loading plane 4 and the teeth T2 of the unloading plane 5 will be disposed in an alternating manner, thus defining the exchange plane 7 (see figure 8). In particular, the free end 4b of the loading plane 4 will be disposed in proximity to the fixed end 5a of the unloading plane 5, whereas the free end 5b of the unloading plane 5 will be disposed in proximity to the fixed end 4a of the loading plane 4 (figure 4).

The layer 2, having reached the final height L2 and still on the loading plane 4, is picked up by the unloading plane 5, remaining momentarily on the exchange plane 7. In the embodiment described and illustrated here, the passing of the layer 2 from the loading plane 4 to the unloading plane 5 is enabled by the interference of the teeth T1, T2 of the due combs 4, 5.

Advantageously, the descent of the loading plane 4 can take place as soon as the layer 2 is picked up by the unloading plane 5.

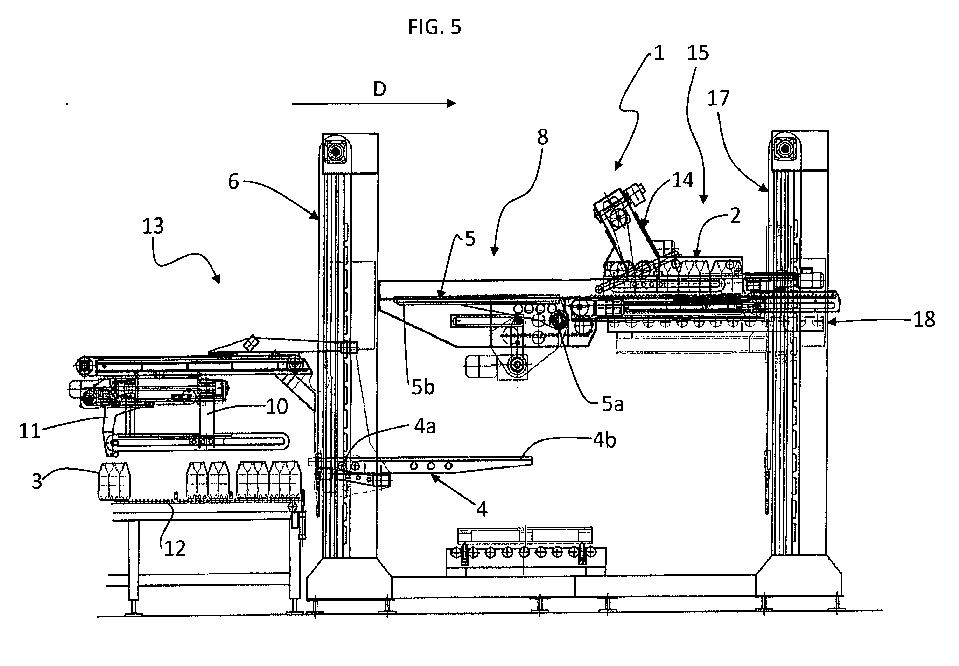

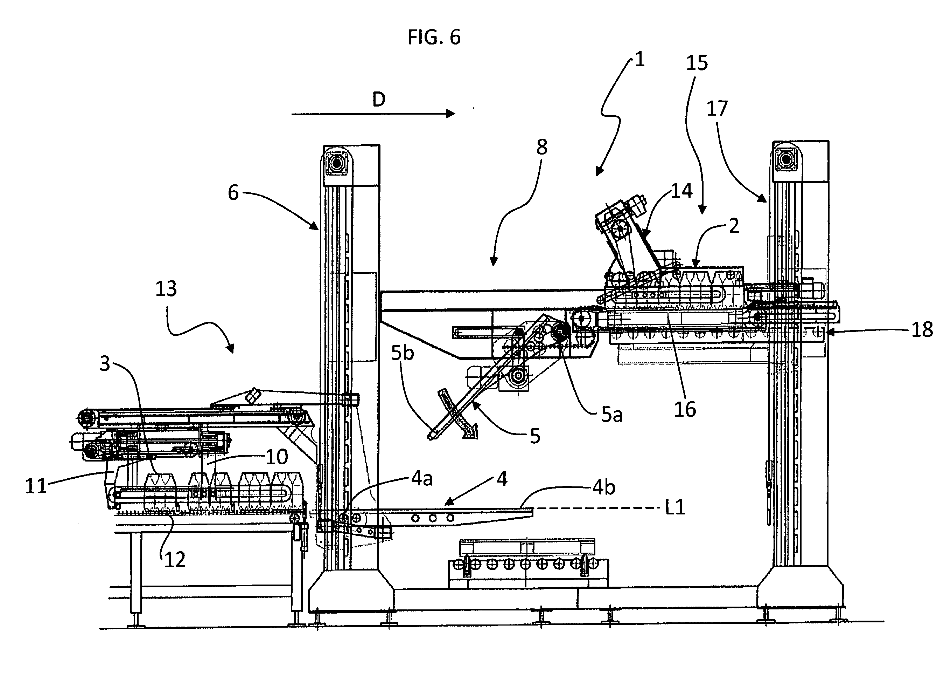

At this point, as illustrated in figure 5, the manipulation and handling means 13 slide vertically downwards along the guide uprights 6, until the loading plane 4 goes back to the initial height L1 so as to be able to receive a new layer 2 (see figure 6). Simultaneously with the descent of the manipulation and handling means 13, from the unloading plane 5 the layer 2 continues along an advancing direction D and is transferred into a palletizing station 15.

The movement of the layer 2 at the final height L2 towards the palletizing station 15 takes place, for example, by means of a carriage 14 moving away from the guide uprights 6.

At this point, the unloading plane 5 begins rotating so as to bring itself back towards the first angular position, while new packs 3 are subjected to the action of the lateral bars 10 on the forming plane 12 (see figure 6).

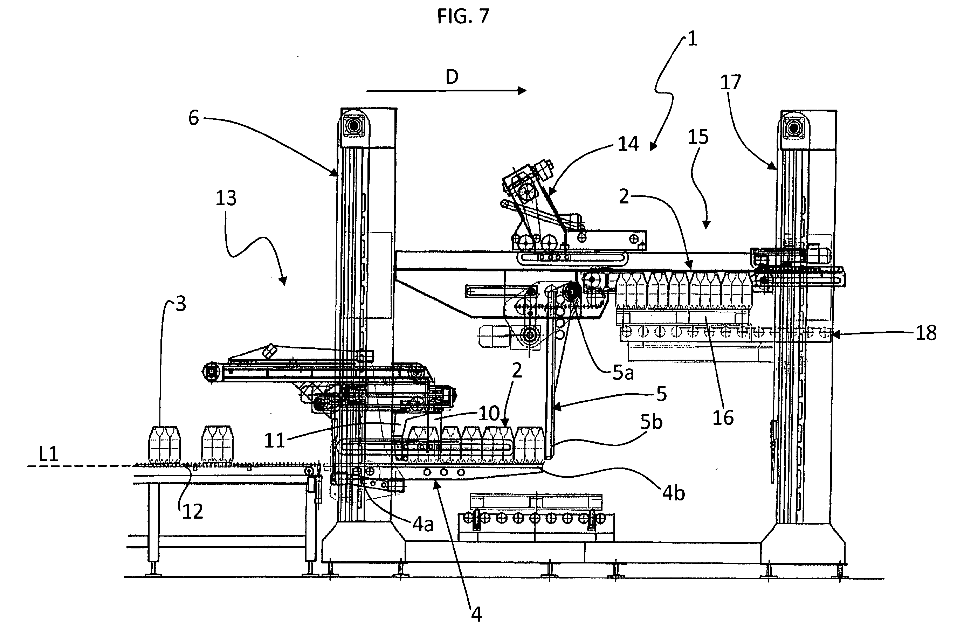

When the unloading plane 5 has returned into the first angular position (figure 7), a new layer 2 is already ready to be lifted on the loading plane 4.

In the meantime, the layer 2, having arrived in the palletizing station 15, is deposited on a pallet 16. The carriage 14 retreats toward the guide uprights 6. The pallet 16 is disposed on a palletization plane 18 sliding on additional vertical guide uprights 17 in such a way as to descend progressively to enable the stacking of the subsequent incoming layers 2. Preferably, the final height L2 is comprised between 1.70 metres and 2 metres. In any case, said final height L2 is predefined based on the height of the stack it is desired to obtain.

Thanks to the fact that the loading plane and the unloading plane are mutually complementarily shaped, as soon as the unloading plane is disposed in the second angular position (at the final height), the loading plane can start descending. The exchange of the layer takes place almost instantaneously, as the layer is supported by at least one of the two planes (loading plane or unloading plane).

Thanks to this configuration of the planes and this sequence of movements, the device is capable of quickly unloading the layer and enables the operations of loading a new layer to begin immediately. The overall productivity of the line is undoubtedly increased compared to the single mobile plane and double mobile plane solutions.

Moreover, the proposed device is simple, compact and economical because it is based exclusively on the presence of two complementarily shaped planes capable of cooperating with each other at least in one operating step (the one in which they exchange the layer).

## Claims

1. Device (1) for lifting and unloading a layer (2) of packs (3), comprising:
a loading plane (4) mobile between an initial height (L1) in which it receives the layer (2) to be lifted and a final height (L2), higher than the initial height (L1), to which the received layer (2) is brought, said loading plane (4) being able to translate vertically from the initial height (L1) to the final height (L2) and vice versa, said loading plane (4) extending substantially horizontally and being slidingly mounted on two vertical upright guides (6) which are parallel to each other;
an unloading plane (5) configured so as to cooperate with said loading plane (4) at an unloading station (8) located at the final height (L2) so that said layer (2) is transferred from the loading plane (4) to the unloading plane (5),
said loading plane (4) and said unloading plane (5) being mutually complementarily shaped so as to reciprocally interfere and interpenetrate at the unloading station (8), defining an exchange plane (7) for the layer (2), said unloading plane (5) being hinged at a fixed end (5a) thereof so as to rotate between a first angular position in which it avoids interfering with the loading plane (4), and a second angular position in which it defines said exchange plane (7) with the loading plane (4),
said device being **characterised in that** it further comprises:
lateral bars (10), which are operatively active on the packs (3) to compact them while they are on a forming plane (12) at the initial height (L1), said forming plane (12) being upstream of the loading plane (4);
a pusher member (11), which transfers the layer (2) formed by the forming plane (12) to the loading plane (4), initially set at the initial height (L1), the lateral bars (10), the pusher member (11) and the loading plane (4) making up manipulation and handling means (13) slidingly mounted on vertical guide uprights (6), the lateral bars (10) and the pusher member (11) being moreover linearly mobile above the initial height (L1) in order to pass from a zone above the forming plane (12) to a zone above the loading plane (4).

2. Lifting and unloading device (1) according to claim 1, wherein said loading plane (4) and said unloading plane (5) are comb-toothed planes, i.e. provided with teeth (T1, T2), said exchange plane (7) being defined by an alternation of the teeth (T1) of the loading plane (4) and the teeth (T2) of the unloading plane (5).

3. Lifting and unloading device (1) according to claim 2, wherein the teeth (T1) of the loading plane (4) and the teeth (T2) of the unloading plane (5) extend longitudinally, substantially parallel to an advancing direction (D) of the layer (2) along said exchange plane (7).

4. Lifting and unloading device (1) according to claim 1, wherein said unloading plane (5) exhibits a free end (5b), opposite said fixed end (5a), said free end (5b), in said first angular position of the unloading plane (5), being at a lower height relative to the height at which the fixed end (5a) is hinged.

5. Lifting and unloading device (1) according to claim 4, wherein in said second angular position of the unloading plane (5) the free end (5b) and the fixed end (5a) are at same height.

6. Lifting and unloading device (1) according to any one of the preceding claims, wherein said unloading plane (5) covers an angle of about 90° in passing from the first angular position to the second angular position.

7. Lifting and unloading device (1) according to claim 4 or 5, wherein the loading plane (4) has a fixed end (4a) sliding on the guide uprights (6) and a free end (4b) opposite the fixed end (4a); when the unloading plane (5) is in the first angular position and the loading plane (4) is at the initial height (L1), the free end (5b) of the unloading plane (5) is situated in proximity to the free end (4b) of the loading plane (4); the free end (5b) of the unloading plane (5) being operatively active alongside the free end (4b) of the loading plane (4) so as to limit the advancing of the layer (2) and prevent it from falling.

## Patentansprüche

1. Vorrichtung (1) zum Abheben und Entladen einer Lage (2) von Packungen (3), umfassend:
eine Ladeebene (4), die zwischen einer anfänglichen Höhe (L1), in der sie die abzuhebende Lage (2) aufnimmt, und einer abschließenden Höhe (L2), die höher ist als die anfängliche Höhe (L1), auf die die aufgenommene Lage (2) gebracht wird, beweglich ist, wobei die Ladeebene (4) in der Lage ist, vertikal von der anfänglichen Höhe (L1) auf die abschließende Höhe (L2) und umgekehrt zu fahren, wobei sich die Ladeebene (4) im Wesentlichen horizontal erstreckt und verschiebbar an zwei vertikalen Führungsstützen (6) montiert ist, die parallel zueinander angeordnet sind;
eine Entladeebene (5), die ausgelegt ist, um mit der Ladeebene (4) an einer Entladestation (8), angeordnet an der abschließenden Höhe (L2), zu kooperieren, sodass die Lage (2) von der Ladeebene (4) zur Entladeebene (5) übergeben wird,
wobei die Ladeebene (4) und die Entladeebene (5) gegenseitig ergänzend ausgebildet sind, sodass sie gegenseitig interferieren und sich gegenseitig an der Entladestation (8) durchdringen, definierend eine Austauschebene (7) für die Lage (2), wobei die Entladeebene (5) mittels eines Gelenks an einem fixieren Ende (5a) davon befestigt ist, sodass sie sich zwischen einer ersten Winkelposition, in der die Interferenz mit der Ladeebene (4) vermieden wird, und einer zweiten Winkelposition, in der sie die Austauschebene (7) mit der Ladeebene (4) definiert, dreht,
wobei diese Vorrichtung **dadurch gekennzeichnet ist, dass** sie ferner umfasst:
seitliche Stäbe (10), die betriebswirksam auf die Packungen (3) wirken, um diese zusammenzupressen, während sich diese auf einer Formungsebene (12) auf der anfänglichen Höhe (L1) befinden, wobei die Formungsebene (12) vor der Ladeebene (4) angeordnet ist;
ein Schieberelement (11), das die von der Formungsebene (12) gebildete Lage (2) an die Ladeebene (4) übergibt, anfänglich eingestellt auf die anfängliche Höhe (L1), wobei die seitlichen Stäbe (10), das Schieberelement (11) und die Ladeebene (4) Manipulations- und Handhabungsmittel (13) ausmachen, die verschiebbar an vertikalen Führungsstützen (6) montiert sind, wobei die seitlichen Stäbe (10) und das Schieberelement (11) ferner linear über die anfängliche Höhe (L1) bewegbar sind, um von einem Bereich über der Formungsebene (12) auf einen Bereich über der Ladeebene (4) zu wechseln.

2. Vorrichtung zum Abheben und Entladen (1) nach Anspruch 1, wobei es sich bei der Ladeebene (4) und der Entladeebene (5) um kammartig verzahnte Ebenen handelt, d. h. um mit Zähnen (T1, T2) ausgestattete Ebenen, wobei die Austauschebene (7) durch ein Abwechseln der Zähne (T1) der Ladeebene (4) und der Zähne (T2) der Entladeebene (5) definiert ist.

3. Vorrichtung zum Abheben und Entladen (1) nach Anspruch 2, wobei sich die Zähne (T1) der Ladeebene (4) und die Zähne (T2) der Entladeebene (5) längs im Wesentlichen parallel zu einer Vorschubrichtung (D) der Lage (2) entlang der Austauschebene (7) erstrecken.

4. Vorrichtung zum Abheben und Entladen (1) nach Anspruch 1, wobei die Entladeebene (5) ein freies Ende (5b) aufweist, das dem fixierten Ende (5a) entgegengesetzt angeordnet ist, wobei sich das freie Ende (5b) in der ersten Winkelposition der Entladeebene (5) auf einer geringeren Höhe zur Höhe, auf der das fixierte Ende (5a) mittels eines Gelenks befestigt ist, befindet.

5. Vorrichtung zum Abheben und Entladen (1) nach Anspruch 4, wobei sich das freie Ende (5b) und das fixierte Ende (5a) in der zweiten Winkelposition der Entladeebene (5) auf derselben Höhe befinden.

6. Vorrichtung zum Abheben und Entladen (1) nach einem der vorhergehenden Ansprüche, wobei die Entladeebene (5) einen Winkel von zirka 90° abdeckt, indem sie von der ersten Winkelposition zur zweiten Winkelposition wechselt.

7. Vorrichtung zum Abheben und Entladen (1) nach Anspruch 4 oder 5, wobei die Entladeebene (4) ein fixiertes Ende (4a) aufweist, das auf den Führungsstützen (6) gleitet, und ein freies Ende (4b), das dem fixierten Ende (4a) entgegengesetzt angeordnet ist; wenn sich die Entladeebene (5) in der ersten Winkelposition befindet und sich die Ladeebene (4) auf der anfänglichen Höhe (L1) befindet, befindet sich das freie Ende (5b) der Entladeebene (5) in der Nähe des freien Endes (4b) der Ladeebene (4); das freie Ende (5b) der Entladeebene (5) wirkt betriebswirksam entlang des freien Endes (4b) der Ladeebene (4), sodass der Vorschub der Lage (2) begrenzt wird und vermieden wird, dass diese herabfällt.

## Revendications

1. Dispositif (1) pour soulever et décharger une couche (2) de paquets (3), comprenant:
un plan de chargement (4) mobile entre une hauteur initiale (L1) dans laquelle il reçoit la couche (2) à soulever et une hauteur finale (L2), plus élevée que la hauteur initiale (L1), à laquelle la couche reçue (2) est amenée, ledit plan de chargement (4) pouvant se déplacer verticalement de la hauteur initiale (L1) à la hauteur finale (L2) et vice-versa, ledit plan de chargement (4) se développant substantiellement horizontalement et
étant monté de façon coulissante sur deux montants de guide verticaux (6) étant parallèles l'un à l'autre;
un plan de déchargement (5) configuré de sorte à coopérer avec ledit plan de chargement (4) à un poste de déchargement (8) situé au niveau de la hauteur finale (L2) de sorte que ladite couche (2) soit transférée du plan de chargement (4) vers le plan de déchargement (5),
ledit plan de chargement (4) et ledit plan de déchargement (5) étant mutuellement de formes complémentaires de sorte à interférer et à s'interpénétrer réciproquement au poste de déchargement (8), définissant un plan d'échange (7) pour la couche (2), ledit plan de déchargement (5) étant monté pivotant à une extrémité fixe (5a) de sorte à effectuer une rotation entre une première position angulaire dans laquelle il évite d'interférer avec le plan de chargement (4), et une seconde position angulaire dans laquelle il définit ledit plan d'échange (7) avec le plan de chargement (4),
ledit dispositif étant **caractérisé en ce qu'**il comprend aussi:
des barres latérales (10), étant fonctionnellement actives sur les paquets (3) pour les compacter pendant qu'ils se trouvent sur un plan de formation (12) situé au niveau de la hauteur initiale (L1), ledit plan de formation (12) étant en amont du plan de chargement (4);
un poussoir (11), transférant la couche (2) formée par le plan de formation (12) au plan de chargement (4), initialement réglé à la hauteur initiale (L1), les barres latérales (10), le poussoir (11) et le plan de chargement (4) composant des moyens de manipulation et de manutention (13) montés coulissant sur des montants de guide verticaux (6), les barres latérales (10) et le poussoir (11) étant de plus mobiles linéairement au-dessus de la hauteur initiale (L1) afin de passer d'une zone située au-dessus du plan de formation (12) à une zone située au-dessus du plan de chargement (4).

2. Dispositif de levage et de déchargement (1) selon la revendication 1, dans lequel ledit plan de chargement (4) et ledit plan de déchargement (5) sont des plans en dents de peigne, c'est-à-dire pourvus de dents (TI, T2), ledit plan d'échange (7) étant défini par une alternance des dents (T1) du plan de chargement (4) et des dents (T2) du plan de déchargement (5).

3. Dispositif de levage et de déchargement (1) selon la revendication 2, dans lequel les dents (TI) du plan de chargement (4) et les dents (T2) du plan de déchargement (5) se développent longitudinalement, de façon substantiellement parallèle à une direction de progression (D) de la couche (2) le long dudit plan d'échange (7).

4. Dispositif de levage et de déchargement (1) selon la revendication 1, dans lequel ledit plan de déchargement (5) présente une extrémité libre (5b), opposée à ladite extrémité fixe (5a), ladite extrémité libre (5b), dans ladite première position angulaire du plan de déchargement (5), étant située à une hauteur inférieure par rapport à la hauteur à laquelle l'extrémité fixe (5a) est montée pivotante.

5. Dispositif de levage et de déchargement (1) selon la revendication 4, dans lequel dans ladite seconde position angulaire du plan de déchargement (5), l'extrémité libre (5b) et l'extrémité fixe (5a) sont à la même hauteur.

6. Dispositif de levage et de déchargement (1) selon l'une quelconque des revendications précédentes, dans lequel ledit plan de déchargement (5) couvre un angle d'environ 90° en passant d'une première position angulaire à une seconde position angulaire.

7. Dispositif de levage et de déchargement (1) selon les revendications 4 ou 5, dans lequel le plan de chargement (4) dispose d'une extrémité fixe (4a) coulissant sur les montants de guide (6) et une extrémité libre (4b) opposée à l'extrémité fixe (4a); lorsque le plan de déchargement (5) se trouve dans la première position angulaire et le plan de chargement (4) se trouve à la hauteur initiale (L1), l'extrémité libre (5b) du plan de déchargement (5) est située à proximité de l'extrémité libre (4b) du plan de chargement (4); l'extrémité libre (5b) du plan de déchargement (5) étant fonctionnellement actif le long de l'extrémité libre (4b) du plan de chargement (4) de sorte à limiter la progression de la couche (2) pour en empêcher la chute.
